# EUROPEAN PATENT APPLICATION

(11) **EP 2 557 029 A1**
(43) Date of publication of application: **13.02.2013**
(21) Application number: 12380040.1
(22) Date of filing: 01.08.2012
(51) Int. Cl.: B62K 25/02, B62K 19/30, B62K 25/28

(54) **Bicycle frame set for building a bicycle frame, with a rear dropout that allows the mounting of different types of wheel axles**

(30) Priority: 11.08.2011 ES 201100917
(71) Applicant: Orbea, S. Coop. Ltda., 48269 Mallabia (Bizkaia) (ES)
(72) Inventor: Auzmendi Arkarazo, Beñat, 48269 Mallabia (Bizkaia) (ES)
(74) Representative: Urteaga Simarro, José Antonio

(57) **Abstract**

Bicycle frame set for building a bicycle frame, where said bicycle frame set comprises a main body (1) and at least two insert parts (7, 7'), each of which comprises a wheel axle coupling area (8, 8') of different shape and/or size, with said insert parts (7, 7') being capable of being mounted alternatively on the main body (1) in order to create at least two different bicycle frames (9, 9') that allow the mounting of two different rear wheels provided with different wheel axles (11).

## Description

### Technical field

The invention relates to a bicycle frame set, i.e. a set of parts for building a bicycle frame that serves as a support for mounting wheels and other bicycle elements.

### Prior art

The rear dropout of a bicycle is the rear part of the bicycle frame where the seat stays and the chain stays meet, and where the wheel axle is mounted in order to support the rear wheel. The wheel axle is usually mounted via an insert part attached between the seat stays, the chain stays and the wheel axle. Additionally, the rear dropout generally allows the connection of the rear brake calliper, for which the dropout is provided with a support for mounting the calliper, this support generally being of the IS ("International System") or "Post Mount" type. The rear dropout also presents a hanging area for fastening the rear derailleur; said area usually takes the form of a replaceable part so that in the event of sustaining damage- which is often the case- one has only to substitute said part, thus avoiding having to replace the whole frame.

A great variety of bicycle frames is known to the prior art, in particular as regards the rear part of the frame or rear dropout. A certain type of frame, commonly referred to as "concentric" in the cycling sector, is **characterised in that** the rear dropout provides the articulated connection of the seat stays, the chain stays and the rear wheel, all of which rotate independently from each other and with respect to the same rotation axis. This concentric frame configuration is based on a very old concept known since 1890, the year patent no. US439095 was granted to H. A. Becker. Said patent shows a seat stay and a chain stay that are articulated with respect to a rear rotation axis, where the rear wheel rotates with respect to the same rotation axis. The chain stay's forward end is articulately connected to the frame, whereas the seat stay's forward end is articulately connected to a mobile point to which a shock absorber spring and a controlling tie rod are also articulately connected, the opposite ends of which are both connected to fixed points of the frame. Thus, the frame, tie rod, chain stay and seat stay form an articulated quadrilateral whose dynamic performance allows for an adequate displacement of the rear rotation axis of the wheel in a controlled and cushioned manner, providing the bicycle with a rear suspension against possible irregularities of the terrain. This rear concentric suspension philosophy has subsequently been applied in further concentric frame models, such as those described in patent no. US7837213 in favour of Trek Bicycle Corporation and in patent no. US7717212 in favour of Split Pivot, Inc.

Presently, the greatest advantage of a concentric connection between the chain stays, the seat stays and the wheel is that it allows integrating all the elements that compose a frame's rear dropout: the "post-mount" or kind of support for mounting the rear brake calliper, the wheel axle, the chain stays, the seat stays, and the replaceable part that comprises the hanging area for fastening the rear derailleur. This integration results in a robust yet light construction.

In concentric bicycles, the rear wheel is connected to the bicycle frame by mounting the wheel axle to the frame's rear dropout, as already mentioned. Traditionally, the rear dropout's geometry and dimensions are designed for receiving a specific wheel axle from the range of different wheel axles available in the market (e.g., the 135x9 axle, which has become the standard axle for mountain bikes, and the 142x12 thru axle).

The objective of the present invention is to offer a technical solution that provides a bicycle frame with a rear dropout that allows the mounting of different types of wheel axles (wheel axles of different dimensions and/or typologies) so that the user is able to easily replace a wheel provided with a certain type of wheel axle with another wheel provided with a different type of wheel axle, without having to substitute the entire frame. Thus, the invention will allow the owner of a certain bicycle frame to not only use wheels that are provided with a certain wheel axle, but to also use wheels with different types of wheel axles, thereby increasing the range of wheels that may be selected for equipping one's bicycle.

### Brief description of the invention

The object of the invention is a set of parts, hereafter called frame set, which allows the building of a bicycle frame, where the frame set allows the bicycle frame to be easily adapted for receiving different types of wheel axles, i.e., wheel axles of different dimensions and/or typologies. The frame set, like other sets of parts known to prior art for building a bicycle frame, comprises a basic element or main body that is provided with chain stays and seat stays, the rearward ends of which are provided with a mounting seat on which an insert part can be mounted, which in turn provides a wheel axle coupling area.

The frame set according to the invention presents the particularity that it further comprises at least two insert parts, each of which is provided with a wheel axle coupling area for mounting a wheel axle of different shape and/or size. Said insert parts may be mounted alternatively on the mounting seat of the main body in order to create respectively at least two different bicycle frames.

Thus, it is possible to create a number of different frames by means of a single main body and several insert parts, thereby enabling the mounting of rear wheels that are provided with different wheel axles. The main body constitutes the largest part of the frame, whereas the insert parts are small-sized parts that can easily be replaced. The resulting frame, according to the invention, is adaptable to different wheel axles by simply replacing one small part (the insert part) with a different one.

### Brief description of the drawings

Details of the invention are depicted in the accompanying figures, which are intended to be illustrative and non-limiting:
- Figure 1 shows a side view of a bicycle frame.
- Figure 2 shows the rear dropout of a main body of a conventional bicycle frame.
- Figure 3 shows one embodiment of the bicycle frame set according to the invention, comprising a main body and two insert parts; only a partial view of the main body, showing the rear part or rear dropout, is shown.
- Figures 4 and 5 show respective frames, created after mounting respective different insert parts on the same main body.
- Figure 6 shows one embodiment of the mounting seat that enables the main body of the bicycle frame set to receive the insert parts.

### Detailed description of the invention

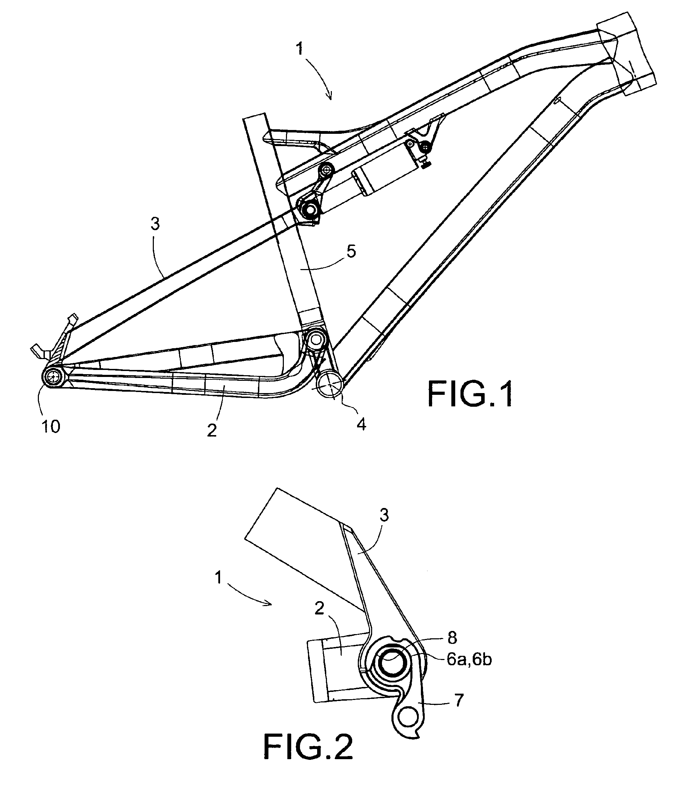

The bicycle frame is an element designed, among other purposes, for allowing the mounting of a rear wheel provided with a wheel axle. The fundamental element of the frame is the main body, an example of which is shown in Figure 1. As can be observed in said figure, the main body (1) comprises chain stays (2) and seat stays (3). The purpose of the chain stays (2) is to connect the bottom bracket (located in the position marked with the reference number 4) with the rear wheel, whereas the seat stays (3) are responsible for connecting the rear wheel to the seat tube (5). A bicycle frame generally comprises two pairs of a chain stay (2) and a seat stay (3), one on each side of the rear wheel for rendering an improved balance and sturdiness to the frame.

Figure 2 shows the rear dropout of a main body (1) of a conventional bicycle frame. As can be observed, said rear dropout, i.e. the rear part of each chain stay (2) and seat stay (3), is usually provided with a mounting seat (6a, 6b), on which an insert part (7) may be mounted, represented in the figure with a bolder line. The purpose of the insert part (7) is to provide, in turn, a wheel axle coupling area (8), on which the wheel axle is mounted.

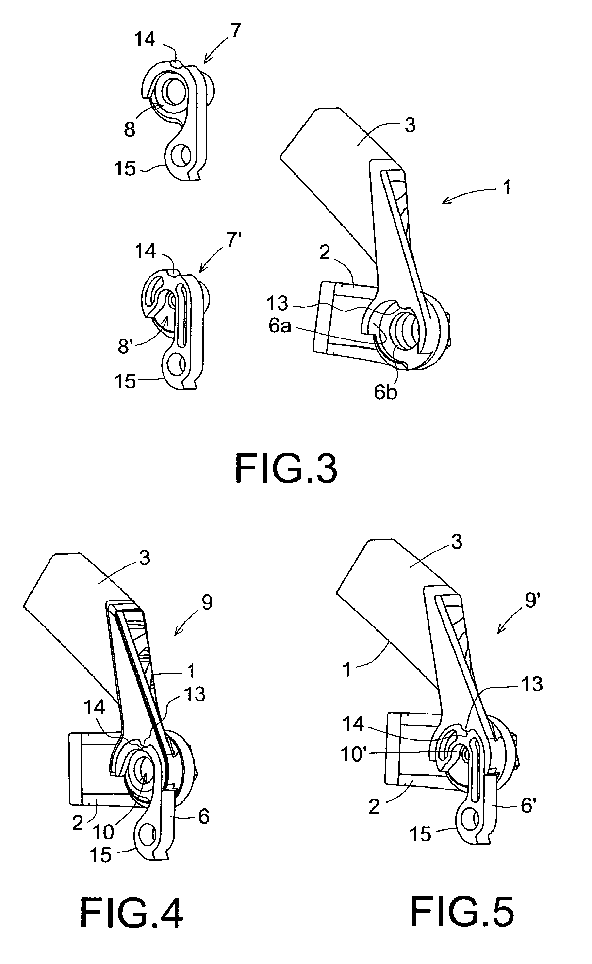

With the aim of obtaining a bicycle frame that can easily be adapted for mounting different types of wheel axles (wheel axles of different dimensions and/or typologies), the invention proposes a set of parts or frame set, an embodiment of which is shown in Figure 3. As can be observed in said figure, the frame set comprises a main body (1) and at least two insert parts (7, 7') - generally, as many as different types of wheel axles are to be able to be connected. Each insert part (7, 7') comprises a wheel axle coupling area (8, 8') of different shape and/or size that is designed to fit respectively to the shape and/or size of a different wheel axle. The insert parts (7, 7') can alternatively be mounted on the mounting seat (6a, 6b) of the main body (1) in order to respectively create at least two different bicycle frames (9, 9') allowing the mounting of two different rear wheels provided with different wheel axles. The rear dropouts of the bicycle frames (9, 9') obtained by the frame set of Figure 3 are shown respectively in Figures 4 and 5. As can be observed, the main body (1) in said figures alternatively offers each of the wheel axle coupling areas (8, 8').

Thus, in order to build the bicycle frame (9, 9'), the user simply has to carry out the following actions: decide on which type of wheel axle they wish to mount, select the insert part (7, 7') corresponding to the type of wheel axle they have chosen, and mount the insert part (7, 7') on the mounting seat (6a, 6b) of the main body (1), thus obtaining the bicycle frame (9, 9').

Preferably, the main body (1) of the frame set of the present invention is such that the chain stays (2) and the seat stays (3) are articulately connected in an articulated connection located in the rearward ends of the chain stays (2) and the seat stays (3). The chain stays (2) and the seat stays (3) rotate in relation to a rotation axis (10), with respect to which the rear wheel axle also rotates. In other words, it is preferable that the main body (1) is of the concentric type, an example of which can be seen in Figure 1.

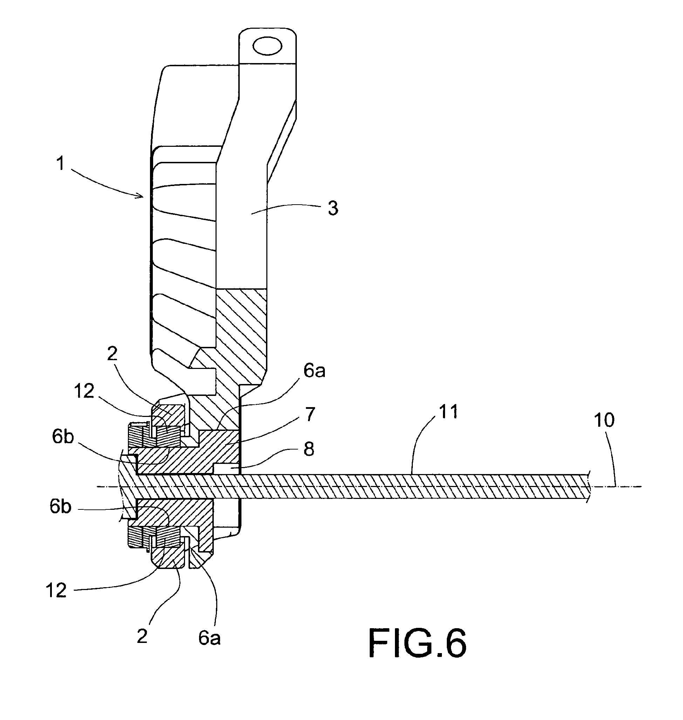

In this case, an especially advantageous embodiment of the seating area (6a, 6b) is one that allows the main body (1) to be fitted with the insert parts (7, 7'), represented in Figure 6, in which a wheel axle (11) is also shown in a very schematic way. In this embodiment, the mounting seat (6a, 6b) comprises a first mounting seat (6a) and a second mounting seat (6b). The first mounting seat (6a) is located in the rearward end of the seat stay (3). The second mounting seat (6b) is located in the inner side of a bearing (12) situated between the chain stay (2) and the insert part (7, 7') allowing the chain stay (2) to rotate independently to the seat stay (3) and the insert part (7, 7'). The first mounting seat (6a) comprises, as can be observed in Figures 3 to 5, an anti-rotation element (13) that engages with a complementary anti-rotation element (14) located on the insert part (7) that prevents the insert part (7) from rotating due to interaction forces in the system.

Preferably, the frame set is **characterized in that** it comprises insert parts (7, 7') that are provided with an appendix (15) that allows the fastening of the bicycle's rear derailleur.

The object of the invention is not only the defined frame set but also its individual separate components, i.e. a main body (1) designed to be fitted with different insert parts (7, 7') and an insert part (7, 7') intended to form part of a set of insert parts, which in turn are designed to be alternatively mounted on the same main body (1).

## Claims

1. Frame set for building a bicycle frame that allows the mounting of a rear wheel provided with a wheel axle (11), where said frame set comprises a main body (1) featuring chain stays (2) and seat stays (3), whose rearward ends are provided with a mounting seat (6a, 6b), on which an insert part can be mounted that in turn comprises a coupling area for the wheel axle, where the frame set is **characterized in that** it also comprises:
- at least two insert parts (7, 7'), each of which is provided with a wheel axle coupling area (8, 8') with different shape and/or size, with the insert parts (7, 7') being capable of being mounted alternatively on the mounting seat (6a, 6b) of the main body (1) in order to create at least two different bicycle frames (9, 9') that allow the mounting of two different rear wheels provided with different wheel axles (11).

2. Frame set according to claim 1, **characterized in that** the chain stays (2) and the seat stays (3) are articulately connected in an articulated connection located in the rearward ends of the chain stays (2) and the seat stays (3), wherein the chain stays (2) and the seat stays (3) rotate in relation to a rotation axis (10), where the wheel axle (11) of the rear wheel also rotates with respect to said rotation axis.

3. Frame set according to claim 2, **characterized in that** the mounting seat (6a, 6b) comprises a first mounting seat (6a) located in the rearward end of the seat stay (3), and a second mounting seat (6b) located in the inner side of a bearing (12) situated between the chain stay (2) and the insert part (7, 7') allowing the chain stay (2) to rotate independently to the seat stay (3) and the insert part (7, 7').

4. Frame set according to claim 3, **characterized in that** the first mounting seat (6a) comprises an anti-rotation element (13) that engages with a complementary anti-rotation element (14) located on the insert part (7) that prevents the insert part (7) from rotating.

5. Frame set according to claim 1, **characterized in that** the insert parts (7, 7') comprise an appendix (15) that allows the fastening of the bicycle's rear derailleur.

6. Main body (1) of a frame set according to any of claims 1 to 5.

7. Insert part (7, 7') of a frame set according to any of claims 1 to 5.
